# EUROPÄISCHE PATENTSCHRIFT

(11) **EP 3 805 459 B1**
(45) Veröffentlichungstag und Bekanntmachung des Hinweises auf die Patenterteilung: **07.06.2023**
(21) Anmeldenummer: 20199677.4
(22) Anmeldetag: 01.10.2020
(51) Int. Cl.: E01F 8/00, E04B 1/84

(54) **SCHALLSCHUTZBAUTEIL AUS HAUFWERKSPORIGEM BETON**
SOUNDPROOFING COMPONENT OF LIGHTWEIGHT AGGREGATE CONCRETE
COMPOSANT DE PROTECTION ACOUSTIQUE EN BÉTON DE TEXTURE CAVERNEUSE

(30) Priorität: 11.10.2019 AT 508722019
(43) Veröffentlichungstag der Anmeldung: 14.04.2021
(73) Patentinhaber: Kirchdorfer Fertigteilholding GmbH, 2752 Wöllersdorf (AT)
(72) Erfinder: BARNAS, Alexander, 1020 Wien (AT); LIVIU, Roman, 2752 Wöllersdorf (AT)
(74) Vertreter: Gibler & Poth Patentanwälte KG

(56) Entgegenhaltungen:
- EP-A1- 0 710 633
- EP-A1- 3 249 135
- WO-A1-2010/063782
- WO-A1-2011/075755
- DE-U1- 9 209 503

## Beschreibung

Die Erfindung betrifft ein Schallschutzbauteil, das als Betonleitwandelement ausgebildet ist, gemäß dem Oberbegriff des Patentanspruches 1.

Es ist bekannt, dass haufwerksporiger Beton die Eigenschaft aufweist, Lärm absorbieren zu können. Haufwerksporiger Beton weist diesbezüglich Hohlräume zwischen den Gesteinskörnern auf. Durch diese Hohlräume innerhalb des Betons wird die Luftschallübertragung aufgrund verlustbehafteter Reflexionen innerhalb der Hohlräume gedämpft.

In der Regel werden daher zumindest Teile von Betonkörpern von Schallschutzbauteilen aus haufwerksporigem Beton ausgebildet. Ein wichtiges Kriterium für eine zufriedenstellende Schallabsorption eines Schallschutzbauteiles ist insbesondere eine große Oberfläche des schallabsorbierenden Bereiches. Es ist jedoch nicht zwingend notwendig das gesamte Schallschutzbauteil aus haufwerksporigem Beton auszubilden um eine zufriedenstellende Schallabsorption zu erzielen. Daher weisen Schallschutzbauteile oftmals zumindest einen Bereich aus haufwerksporigem Beton auf, welcher einer potentiellen Schallquelle zugewandt ist. Im Straßenverkehr ist demnach ein Schallschutzbauteil mit seinem schallabsorbierenden Bereich der Fahrbahn zugewandt.

Die WO 2010/063782 A1 zeigt eine Dränbeton-Zusammensetzung enthaltend Zement, Füllstoff und Polymerisat, ein Verfahren zur Herstellung der Dränbeton-Zusammensetzung und die Verwendung der Dränbeton-Zusammensetzung. Dabei können die anwendungstechnischen Eigenschaften der Dränbeton-Zusammensetzungen durch Zugabe von Zusatzmittel, wie beispielsweise Fasern, verbessert werden. Die Dränbetonzusammensetzung eignet sich einerseits zur Herstellung von Fahrbahndecken oder versickerungsfähigen Flächen, sowie zur Herstellung von Lärmschutzwenden.

Die EP 0 710 633 A1 zeigt einen Dränbeton, ein Verfahren zur Herstellung des Dränbetons, sowie dessen Verwendung als offenporigen Fahrbahnbelag. Dabei kann der Dränbeton Betonzusatzstoffe zur Beeinflussung der mechanischen Eigenschaften aufweisen, wie beispielsweise Fasern aus Kunststoff, Glas, Metall, Kohle und Cellulose.

Die EP 3 249 135 A1 zeigt ein isolierendes Wandelement zum Verkleiden von Oberflächen, insbesondere von Fassaden, welches als Verbundplatte eine Leichtbetonschicht umfasst. Dabei kann die Leichtbetonschicht aus einem haufwerksporigen Leichtbeton ausgebildet sein und eine Armierung, beispielsweise aus Glasfaser, Polymerfaser oder aus einem Metallnetz, aufweisen.

Die DE 92 09 503 U1 zeigt eine Lärmschutzwand mit Wandelementen, welche zwischen vertikalen Befestigungsstützen angeordneten sind und welche ein mineralisches Schallabsorptionsmaterial aufweisen.

Die WO 2011/075755 A1 zeigt ein Schallschutzbauteil, wobei das Schallschutzbauteil als einstückiger Betonkörper ausgebildet ist, wobei der Betonkörper Zuschlagstoffe beinhaltet und wenigstens eine erste Oberfläche des Betonkörpers als akustischer Absorber zur Dämpfung von Luftschall ausgebildet ist. Nachteilig an herkömmlichem haufwerksporigen Beton ist, dass dieser einen geringen Frost-Tausalzwiderstand und somit eine geringe Verwitterungsbeständigkeit gegenüber Frost-Tauwechseln und Tausalzen aufweist. In den Poren des Betons gefrierendes Wasser kann Zugspannungen in dem Betongefüge aufbauen und eine Gefügeschädigung bewirken. Tausalze begünstigen zusätzlich die Verwitterung von insbesondere oberflächennahen Bereichen des Betons. Demnach ist der Frost-Tausalzwiderstand von Schallschutzbauteilen, welche einen Bereich aus herkömmlichem haufwerksporigen Beton aufweisen oder die gar komplett aus einem herkömmlichen haufwerksporigem Beton ausgebildet sind, in der Regel gering. Hierdurch müssen die Bereiche des haufwerksporigen Betons oder gar das ganze Schallschutzbauteil regelmäßig ausgetauscht beziehungsweise erneuert werden.

Aufgabe der Erfindung ist es daher ein Schallschutzbauteil der eingangs genannten Art anzugeben, mit welchem die [weiter auf Seite 2 der ursprünglichen Beschreibung] genannten Nachteile vermieden werden können, mit welchem für den Einsatzzweck als Schallschutzbauteil eine hohe Lebensdauer des Schallschutzbauteils ermöglicht wird.

Erfindungsgemäß wird dies durch die Merkmale des Patentanspruches 1 erreicht.

Dadurch ergibt sich der Vorteil, dass die Lebensdauer des Schallschutzbauteils, welches einen Bereich aus haufwerksporigem Beton aufweist, verlängert wird. Dadurch, dass der haufwerksporige Beton Fasern beinhaltet, die im Wesentlichen den haufwerksporigen Beton durchziehen und ein dreidimensionales Gitter ausbilden, ergibt sich eine höherer Widerstand des Betongefüges gegenüber einem hydraulischen Druck bzw. Zugspannungen, welche durch in die Poren eindringendes, gefrierendes und wieder auftauendes Wasser entstehen. Weiters ist vorteilhaft, dass durch die Fasern ein besserer Zusammenhalt der Gesteinskörner bewirkt wird und eine Oberflächenabwitterung durch Tausalze verringert wird. Somit wird die Anordnung eines Schallschutzbauteils, welches einen Bereich aus haufwerksporigem Beton aufweist, nahe an einer Fahrbahn bei geringer Verwitterung ermöglicht.

Die Unteransprüche betreffen weitere vorteilhafte Ausgestaltungen der Erfindung. Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines Schallschutzbauteils in Seitenansicht;
Fig. 2 die erste bevorzugte Ausführungsform eines Schallschutzbauteils in Frontansicht;
Fig. 3 die erste bevorzugte Ausführungsform eines Schallschutzbauteils in Aufsicht;
Fig. 4 eine zweite bevorzugte Ausführungsform eines Schallschutzbauteils in Seitenansicht;
Fig. 5 die zweite bevorzugte Ausführungsform eines Schallschutzbauteils in Frontansicht und
Fig. 6 die zweite bevorzugte Ausführungsform eines Schallschutzbauteils in Aufsicht.

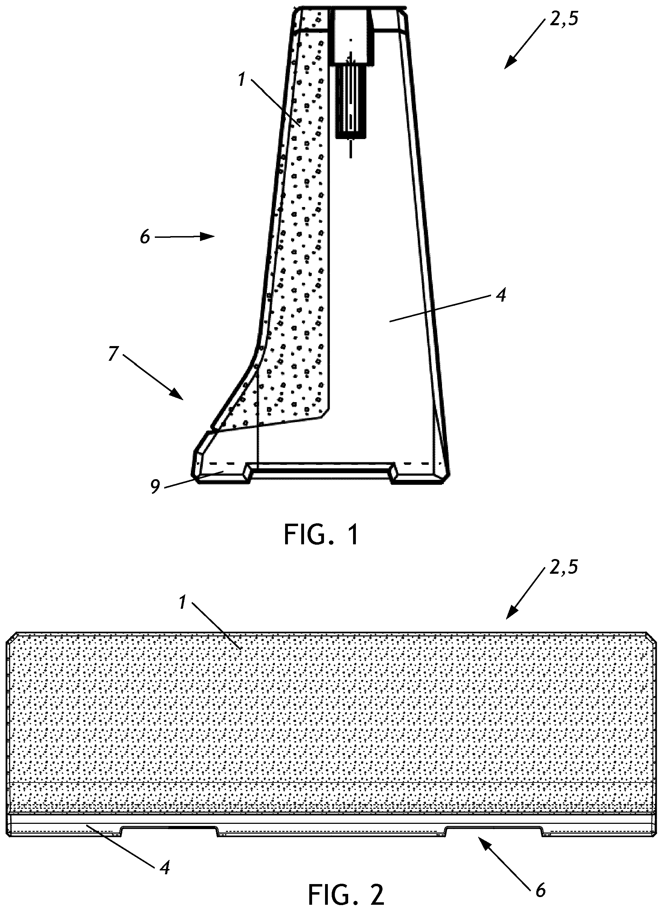

Die Fig. 1 bis 6 zeigen zwei bevorzugte Ausführungsformen eines Schallschutzbauteils mit wenigstens einem Bereich aus haufwerksporigem Beton 1.

Es ist haufwerksporiger Beton 1 für ein Schallschutzbauteil 2 umfassend wenigstens ein Bindemittel und Zuschlagstoffe, wobei der haufwerksporige Beton 1 weiters Fasern beinhaltet, vorgesehen.

Es ist weiters ein Schallschutzbauteil 2 umfassend einen Betonkörper, wobei der Betonkörper wenigstens einen Bereich aus haufwerksporigem Beton 1 umfasst, vorgesehen.

Dadurch ergibt sich der Vorteil, dass die Lebensdauer des haufwerksporigen Betons, insbesondere eines Schallschutzbauteils 2, welches einen Bereich aus haufwerksporigem Beton 1 aufweist, verlängert wird. Dadurch, dass der haufwerksporige Beton 1 Fasern beinhaltet, die im Wesentlichen den haufwerksporigen Beton 1 durchziehen und ein dreidimensionales Gitter ausbilden, ergibt sich eine höherer Widerstand des Betongefüges gegenüber einem hydraulischen Druck bzw. Zugspannungen, welche durch in die Poren eindringendes, gefrierendes und wieder auftauendes Wasser entstehen. Weiters ist vorteilhaft, dass durch die Fasern ein besserer Zusammenhalt der Gesteinskörner bewirkt wird und eine Oberflächenabwitterung durch Tausalze verringert wird. Somit wird die Anordnung eines Schallschutzbauteils, welches einen Bereich aus haufwerksporigem Beton 1 aufweist, nahe an einer Fahrbahn bei geringer Verwitterung ermöglicht.

Der Frost-Tausalzwiderstand gibt an, wie beständig ein Beton gegenüber Frost mit und ohne Taumittel ist. Der Phasenübergang von Wasser zu Eis führt zu einer Volumenzunahme, welche einen hydraulischen Druck im Betongefüge ausübt und es zu einer inneren Gefügeschädigung kommen kann. Während eines Frost-Tau-Wechsels entstehen Druckunterschiede, welche einen weiteren Eintritt von Wasser in noch wasserfreie Poren des Betons begünstigen. Tausalze erhöhen zusätzlich durch schichtweises Gefrieren oder durch osmotische Drücke die Spannungen in dem Betongefüge. Weiters steigt bei zunehmendem Chloridgehalt der Wassersättigungsgrad in oberflächennahen Poren an. Hierdurch kann es zu einer Oberflächenabwitterung kommen, wobei fortlaufend kleine Betonbereiche von der Oberfläche abgelöst werden.

Zur Herstellung von haufwerksporigem Beton 1 werden insbesondere Gesteinskörnungen verwendet, bei welchen die einzelnen Körner im Wesentlichen die gleiche Größe aufweisen. Dadurch sind zwischen den einzelnen Gesteinskörnern möglichst viele Hohlräume, sogenannte Haufwerksporen, vorhanden. Durch die Poren werden Bereiche geschaffen, in welchen auftreffenden Schallwellen Energie entzogen wird, da es in jedem Hohlraum wenigstens in bestimmten Frequenzbereichen zu einer Abstrahlung von Luftschall kommt, welcher wiederum auf weitere Partikel in weiteren Hohlräumen trifft und diese Vorgänge verlustbehaftet sind. Eine Pore ist hierbei insbesondere ein Hohlraum zwischen zwei oder mehr als zwei Gesteinskörnern.

Der haufwerksporige Beton 1 ist insbesondere offenporig. Der haufwerksporige Beton 1 weist insbesondere ein Netz an Poren auf, die miteinander in Verbindung stehen. Durch die miteinander in Verbindung stehenden Hohlräume werden die Schalldämpfungseigenschaften des haufwerksporigen Betons 1 stark begünstigt.

Durch die Wahl der Korngrößen der Gesteinskörner kann bereits beim Herstellungsprozess einfach die Größe der Poren vorgegeben werden. Es hat sich gezeigt, dass der wirksame Frequenzbereich durch die Größe der Poren beeinflusst werden kann.

Zur Bildung der Poren kann weiters vorgesehen sein, dass die Partikel der Zuschlagsstoffe eine unstetige Sieblinie aufweisen. Eine unstetige Sieblinie bezeichnet dabei den Umstand, dass bestimmte vorgebbare Körnungen bei den Zuschlagstoffen nicht vorhanden sind. Dadurch kann ebenfalls eine Vorgabe der Art, Anzahl und Größe der Poren erzielt werden. Die Poren werden dabei durch freie Zwischenräume zwischen einzelnen Partikeln der Zuschlagsstoffe gebildet.

Bindemittel sind anorganische oder organische Substanzen, die im Laufe einer Zeitspanne erhärten und dabei andere Stoffe miteinander verbinden.

Bevorzugt umfasst das Bindemittel einen oder mehrere mineralische Stoffe.

Der haufwerksporige Beton 1 beinhaltet weiters Fasern. Das bedeutet, dass mehrere, bevorzugt eine Vielzahl an Fasern das Gefüge des haufwerksporigen Betons 1 durchspannen. Die Fasern bilden sozusagen ein dreidimensionales Netz im Gefüge des haufwerksporigen Betons 1 aus.

Zur Herstellung des haufwerksporigen Betons 1 werden bevorzugt die Fasern zuerst mit einem Bindemittel vermischt und anschließend wird das Gemisch aus Fasern und Bindemittel mit der Gesteinskörnung vermischt.

Besonders bevorzugt kann vorgesehen sein, dass die Fasern wenigstens einen Kunststoff, insbesondere einen thermoplastischen Kunststoff, bevorzugt Polypropylen, umfassen. Vorteilhaft ist hierbei, dass im Gegensatz zu einer Bewehrung aus Stahl, die Kunststofffasern gegenüber gängigen Tausalzen eine erhöhte Widerstandsfähigkeit bzw. Korrosionsbeständigkeit aufweisen. Durch die Verteilung der Fasern in dem Betongefüge entsteht eine im Wesentlichen flächendeckende Bewehrung, sozusagen eine Mikrovernetzung, wodurch - in einem Zeitraum gesehen- weniger und lediglich kleine Teile von der Oberfläche absplittern, wodurch der haufwerksporige Beton 1 verwitterungsbeständiger als ein haufwerksporiger Beton ohne Fasern oder mit lediglich einer groben Bewehrung aus Stahl, beispielsweise einem Zugband, ist.

Es kann aber auch vorgesehen sein, dass das Schallschutzbauteil 2 zusätzlich zu den Fasern eine Bewehrung aus Stahl, insbesondere ein Zugband, umfasst, wodurch das Schallschutzbauteil 2 bei einem Fahrzeuganprall hohe Zugkräfte aufnehmen kann.

Bevorzugt kann vorgesehen sein, dass der Fasergehalt des haufwerksporigen Betons 1 bevorzugt maximal 3 kg/m³, insbesondere maximal 2 kg/m³, besonders bevorzugt maximal 1,6 kg/m³, ist.

Bevorzugt kann auch vorgesehen sein, dass der Fasergehalt des haufwerksporigen Betons 1 bevorzugt minimal 1,0 kg/m³, insbesondere minimal 1,2 kg/m³, besonders bevorzugt minimal 1,4 kg/m³, ist.

Der Fasergehalt ist hierbei die Masse der Fasern in kg, welche ein Kubikmeter haufwerksporiger Beton 1 aufweist.

Hierdurch kann eine besonders gute Vernetzung der Gesteinskörner bzw. eine flächendeckende Bewehrung erzielt werden.

Es hat sich experimentell gezeigt, dass eine Abwitterung des haufwerksporigen Betons 1 mit Fasern um ≥ 25% weniger stattfand gegenüber einem haufwerksporigen Beton ohne Fasern.

Besonders vorteilhaft hat sich ein Fasergehalt des haufwerksporigen Betons 1 von 1,5 kg/m³ erwiesen.

Es kann auch bevorzugt vorgesehen sein, dass die Rohdichte des haufwerksporigen Betons bevorzugt maximal 2000 kg/m³, insbesondere maximal 1950 kg/m³, besonders bevorzugt maximal 1900 kg/m³, ist.

Bevorzugt kann auch vorgesehen sein, dass die Rohdichte des haufwerksporigen Betons 1 bevorzugt minimal 1650 kg/m³, insbesondere minimal 1750 kg/m³, besonders bevorzugt minimal 1850 kg/m³, ist.

Die Rohdichte bezeichnet hierbei die Masse eines Stoffes bezogen auf die Volumeneinheit einschließlich der Eigenporen des Stoffes, aber ohne dessen Haufwerksporen.

Hierdurch ergibt sich der Vorteil, dass der haufwerksporige Beton 1 in diesen Rohdichtebereichen besonders gute schallabsorbierende Eigenschaften aufweist.

Besonders bevorzugt kann vorgesehen sein, dass das Bindemittel wenigstens einen Zementleim umfasst.

Bevorzugt wird bei der Herstellung des haufwerksporigen Betons 1 wenigstens ein Zementleim mit einer vorgemischten Gesteinskörnung mit Fasern gemischt. Bevorzugt kann vorgesehen sein, dass der Zementleim mit wenigstens 10%, insbesondere mit wenigstens 12%, bevorzugt mit wenigstens 13%, Luftporen hergestellt wird.

Es ist bevorzugt vorgesehen, dass der wenigstens eine Zementleim die Hohlräume zwischen den Gesteinskörnern nicht ausfüllt, sondern lediglich die Gesteinskörner umhüllt und aneinander bindet.

Es kann weiters vorgesehen sein, dass der haufwerksporige Beton 1 Luftporenbildner umfasst.

Erfindungsgemäß weist ein Schallschutzbauteil 2 einen Betonkörper auf, wobei der Betonkörper wenigstens einen Bereich aus haufwerksporigem Beton 1 umfasst. Der Bereich aus haufwerksporigem Beton 1 fungiert hierbei insbesondere als akustischer Absorber zur Dämpfung von Luftschall. Weiters kann der Betonkörper auch Körperschall aufnehmen, welcher inbesondere durch das Abrollen von Rädern auf der Fahrbahn erzeugt wird.

Das Schallschutzbauteil 2 ist bevorzugt ein Bauteil, welches einen Schutz vor Schall, bzw. Lärm bietet bzw. ermöglicht. Schutz vor Schall, bzw. Lärm bezeichnet in diesem Zusammenhang eine Verminderung des Schalldrucks bzw. der Schallintensität durch das Schallschutzbauteil 2, welches zwischen einer Schallquelle und einem vor hoher Lärmbelästigung zu schützenden Bereich angeordnet ist. Dies umfasst bevorzugt jede Art bzw. Ursache der Verminderung dieses Schalldruckpegels bzw. dieser Schallintensität durch das Schallschutzbauteil 2, etwa aufgrund von Schalldämpfung, Schalldämmung, Dissipationsverlusten innerhalb des Schallschutzbauteils 2 und/oder Reflexionsverlusten beim Auftreffen der Schallwellen an Grenzflächen.

Die Schallintensität einer, auf das Schallschutzbauteil 2 auftreffende Schallwelle wird im Wesentlichen reflektiert, transmittiert und im Schallschutzbauteil 2 dissipiert.

Die Verhinderung der Transmission der Schallintensität durch das Schallschutzbauteil 2 wird Schalldämmung genannt. Der Parameter, welcher verwendet wird um die Schalldämmungseigenschaften eines Schallschutzbauteils 2 anzugeben, ist das Schalldämmmaß, welches das Verhältnis zwischen transmittierter und einfallender Schallintensität in Dezibel angibt. Die Verhinderung der Reflexion der Schallenergie am Schallschutzbauteil 2 wird Schalldämpfung oder Schallabsorption genannt. Der dazugehörige Parameter ist der Schallabsorptionsgrad, welcher das Verhältnis der nicht-reflektierten Schallintensität zur einfallenden Schallintensität wiedergibt. Sowohl das Schalldämmmaß als auch der Schallabsorptionsgrad sind üblicherweise frequenzabhängig.

Erfindungsgemäß wird vorgesehen sein, dass das Schallschutzbauteil 2 als Betonleitwandelement 5 ausgebildet ist, was beispielhaft in den Fig. 1 bis 6 dargestellt ist.

Bevorzugt kann vorgesehen sein, dass ein, insbesondere mehrere, Betonleitwandelemente 5 in einem Fahrzeugrückhaltesystem verwendet werden. Es kann auch vorgesehen sein, dass mehrere Betonleitwandelemente 5 ein Fahrzeugrückhaltesystem ausbilden.

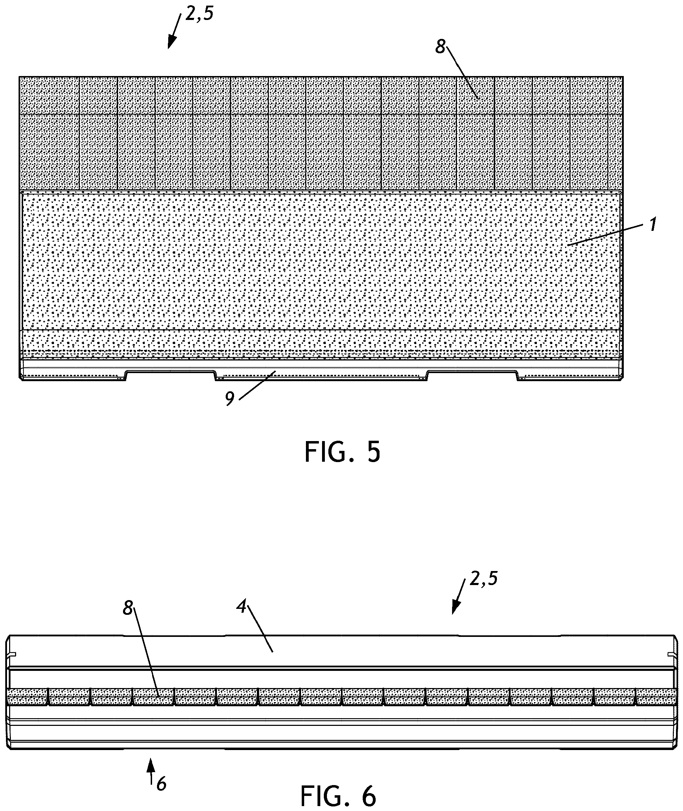

Es kann weiters bevorzugt vorgesehen sein, dass der Bereich aus haufwerksporigem Beton 1 wenigstens eine erste Oberfläche des Schallschutzbauteils 2 ausbildet, wobei sich die erste Oberfläche entlang einer ersten Längsseite 6 des Schallschutzbauteils 2 erstreckt, was beispielhaft in den Fig. 2 und 5 gezeigt ist. Bevorzugt kann vorgesehen sein, dass sich die erste Oberfläche des Schallschutzbauteils 2 im Wesentlichen über eine normal zur ersten Längsseite 6 stehenden Höhe des Schallschutzbauteils 2 erstreckt.

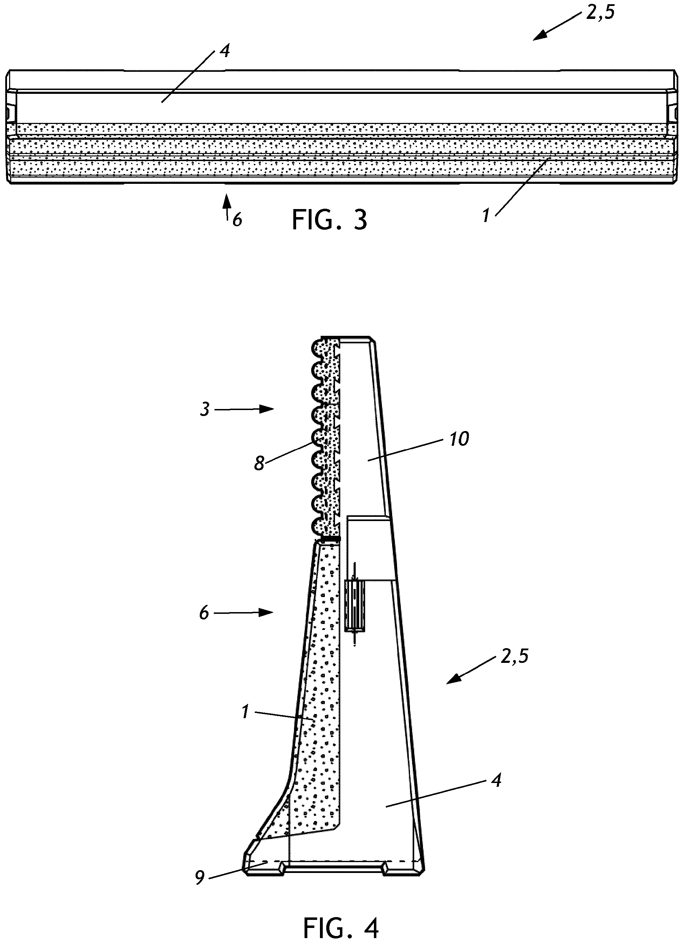

Weiters wird erfindungsgemäß vorgesehen sein, dass das Schallschutzbauteil 2 an wenigstens einer Seite ein Rückweiseprofil aufweist, wobei sich wenigstens ein Teil des Bereichs aus haufwerksporigem Beton 1 bis in das Rückweiseprofil erstreckt, was beispielhaft in den Fig. 1 und 4 gezeigt ist. Das bedeutet, dass der Bereich aus haufwerksporigem Beton 1 in Richtung der Lärmquelle, nämlich einer Fahrbahn zugewandt ist.

Ein Rückweiseprofil ist ein charakteristisch ausgebildetes Profil, welches Unfälle von Fahrzeugen abschwächen soll. Hierzu weist ein Rückweiseprofil in der Regel einen schrägen Bereich, einen sogenannten Auffahrbereich 7 auf, auf welchen ein von der Fahrspur ausbrechendes Fahrzeug auffährt und in eine Schräglage versetzt wird. Anschließend wird das Fahrzeug an einem oberhalb des Auffahrbereichs 7 im Wesentlichen senkrecht zulaufenden Bereich, einen sogenannten Abweisebereich von der Wand in Richtung der Fahrspur abgelenkt.

Der Auffahrbereich 7 ist bevorzugt ein Teil des Rückweiseprofils und dient dazu, von der Spur abgekommene Fahrzeuge zumindest teilweise auf bzw. entlang des Schallschutzbauteils 2 auffahren zu lassen, um die Wucht eines Anpralls der Fahrzeuge an dem Schallschutzbauteil 2 zu verringern.

Das Rückweiseprofil kann insbesondere ein New Jersey Profil oder ein Step Profil sein.

Es kann auch bevorzugt vorgesehen sein, dass das Schallschutzbauteil 2 zwei gegenüberliegende Seiten mit jeweils einem Rückweiseprofil aufweist. Hierzu kann bevorzugt vorgesehen sein, dass auf beiden das Rückweiseprofil aufweisenden Seiten jeweils ein Bereich aus haufwerksporigem Beton 1 angeordnet ist. Dies kann insbesondere der Fall sein, wenn das Schallschutzbauteil 2 zwischen zwei Fahrbahnen angeordnet ist.

Besonders bevorzugt kann vorgesehen sein, dass wenigstens ein Teil des Bereichs aus haufwerksporigem Beton 1 in einem Auffahrbereich 7 des Schallschutzbauteils 2 angeordnet ist. Hierdurch ergibt sich der Vorteil, dass der Bereich aus haufwerksporigem Beton 1 in einem Montagezustand des Schallschutzbauteils 2 bis in einen bodennahen Bereich ragt, wodurch einerseits eine große Oberfläche des Bereichs aus haufwerksporigem Beton 1 erzeugt werden kann und durch diese große und bodennahe Fläche Geräusche bzw. Lärm von der Fahrbahn besonders gut absorbiert werden können. Der Auffahrbereich 7 ist hierbei ein in dem Montagezustand bodennaher Bereich des Schallschutzbauteils 2.

Es kann weiters bevorzugt vorgesehen sein, dass der Betonkörper einen Stützkörper 4 aus einem im Wesentlichen porenfreien Beton aufweist, wobei der wenigstens eine Bereich aus haufwerksporigem Beton 1 an dem Stützkörper 4 befestigt ist, wodurch sich eine besonders hohe Stabilität des Schallschutzbauteils 2 ergibt. Weiters ist hierbei vorteilhaft, dass ein Schallschutzbauteil 2, welches einen Bereich aus haufwerksporigem Beton 1 aufweist, nahe an einer Fahrbahn bei geringer Verwitterung angeordnet werden kann.

Der Stützkörper 4 kann insbesondere selbsttragend sein.

Erfindungsgemäß wird vorgesehen sein, dass der Bereich aus haufwerksporigen Beton 1 einen Großteil der Fläche des Rückweiseprofils abdeckt.

Der Stützkörper 4 kann bevorzugt einen Normalbeton mit einer Trockenrohdichte von 2000 kg/m³ bis zu 2600 kg/m³ und/oder einen Schwerbeton mit einer Trockenrohdichte von mindestens 2600 kg/m³ bis zu 5900 kg/m³ umfassen.

Es wird weiterhin vorgesehen sein, dass das Schallschutzbauteil 2 einen Sockel 9 aufweist, welcher Sockel 9 in dem Montagezustand des Schallschutzbauteils 2 auf dem Untergrund steht. Der Sockel 9 weist hierzu eine Aufstandsfläche auf. Der Sockel 9 kann insbesondere aus Normalbeton und/oder aus Schwerbeton ausgebildet sein.

In einer nicht erfindungsgemäßen Ausbildung kann vorgesehen sein, dass der Bereich aus haufwerksporigem Beton 1 im Wesentlichen den gesamten Betonkörper ausbildet.

Besonders bevorzugt kann vorgesehen sein, dass das Schallschutzbauteil 2 ein Schallschutzelement 3, insbesondere eine Schallschutzwand, aufweist, was beispielhaft in den Fig. 4 bis 6 gezeigt ist.

Das Schallschutzelement 3 kann insbesondere auf dem Schallschutzbauteil 2 befestigt sein. Beispielsweise kann das Schallschutzelement 3 auf das Schallschutzbauteil 2 aufgesetzt und angeschraubt, angeformt oder aufgesteckt sein.

Es kann insbesondere vorgesehen sein, dass das Schallschutzelement 3 auf oder an dem Stützkörper 4 befestigt ist.

Bevorzugt kann das Schallschutzelement 3 auf einer, in dem Montagezustand dem Untergrund gegenüberliegenden Seite des Schallschutzbauteils 2 befestigt sein.

Es kann auch bevorzugt sein, dass das Schallschutzelement 3 an einer kein Rückweiseprofil aufweisenden Seite des Schallschutzbauteils 2 befestigt ist und sich über die Höhe des Schallschutzbauteils 2 erstreckt.

Es kann bevorzugt vorgesehen sein, dass das Schallschutzelement 3 wenigstens einen Bereich aus einem absorbierenden Material 8 aufweist. Das absorbierende Material 8 kann bevorzugt ein Holzbeton sein. Insbesondere in oder in der Nähe von Wohngegenden kann Holzbeton als Schallschutzelement 3 vorgesehen sein, da dieser eine hohe Absorption von Schall aufweist. Ein Fahrzeuganprall erfolgt üblicherweise an dem Schallschutzbauteil 2, insbesondere in einem unteren Bereich des Schallschutzbauteils 2. Der haufwerksporige Beton 1 weist bevorzugt eine höhere Widerstandskraft gegen einen Fahrzeuganprall auf, als das absorbierende Material 8. Das Schallschutzelement 3 dient primär dem zusätzlichen Schallschutz und kann entsprechend unterschiedlich von dem Schallschutzbauteil 2 aufgebaut sein.

Es kann hierzu vorgesehen sein, dass das Schallschutzelement 3 eine Stützeinrichtung 10 aufweist. Der Bereich aus einem absorbierenden Material 8 ist bevorzugt an der Stützeinrichtung 10 befestigt, was beispielhaft in Fig. 4 gezeigt ist.

Im Rahmen der gegenständlichen Offenbarung werden Merkmale üblicherweise mit einem unbestimmten Artikel "ein, eine, eines, einer" eingeführt. Sofern es sich aus dem Kontext nicht anders ergibt, ist dieser unbestimmte Artikel nicht als Zahlenangabe zu verstehen, sodass die Offenbarung nicht auf lediglich ein Vorkommen des jeweiligen Merkmals beschränkt ist.

## Patentansprüche

1. Schallschutzbauteil (2) umfassend einen Betonkörper, wobei der Betonkörper wenigstens einen Bereich aus haufwerksporigem Beton (1) umfasst, wobei der haufwerksporige Beton (1) wenigstens ein Bindemittel und Zuschlagstoffe umfasst, wobei das Schallschutzbauteil (2) als Betonleitwandelement (5) ausgebildet ist, wobei das Schallschutzbauteil (2) an wenigstens einer Seite ein Rückweiseprofil als charakteristisch ausgebildetes Profil, welches Unfälle von Fahrzeugen abschwächen soll aufweist, wobei sich wenigstens ein Teil des Bereichs aus haufwerksporigem Beton bis in das Rückweiseprofil erstreckt,
**dadurch gekennzeichnet, dass** der haufwerksporige Beton (1) weiters Fasern beinhaltet, dass das Schallschutzbauteil (2) einen Sockel (9) aus einem im Wesentlichen porenfreien Beton aufweist, welcher Sockel (9) im Montagezustand des Schallschutzbauteils (2) auf dem Untergrund steht, und dass der wenigstens eine Bereich aus haufwerksporigen Beton einen Großteil der Fläche des Rückweiseprofils abdeckt.

2. Schallschutzbauteil (2) nach Anspruch 1, **dadurch gekennzeichnet, dass** die Fasern wenigstens einen Kunststoff, insbesondere einen thermoplastischen Kunststoff, bevorzugt Polypropylen, umfassen.

3. Schallschutzbauteil (2) nach Anspruch 1 oder 2, **dadurch gekennzeichnet, dass** der Fasergehalt des haufwerksporigen Betons (1) bevorzugt maximal 3 kg/m³, insbesondere maximal 2 kg/m³, besonders bevorzugt maximal 1,6 kg/m³, ist.

4. Schallschutzbauteil (2) nach einem der Ansprüche 1 bis 3, **dadurch gekennzeichnet, dass** der Fasergehalt des haufwerksporigen Betons (1) bevorzugt minimal 1,0 kg/m³, insbesondere minimal 1,2 kg/m³, besonders bevorzugt minimal 1,4 kg/m³, ist.

5. Schallschutzbauteil (2) nach einem der Ansprüche 1 bis 4, **dadurch gekennzeichnet, dass** die Rohdichte des haufwerksporigen Betons (1) bevorzugt maximal 2000 kg/m³, insbesondere maximal 1950 kg/m³, besonders bevorzugt maximal 1900 kg/m³, ist.

6. Schallschutzbauteil (2) nach einem der Ansprüche 1 bis 5, **dadurch gekennzeichnet, dass** die Rohdichte des haufwerksporigen Betons (1) bevorzugt minimal 1650 kg/m³, insbesondere minimal 1750 kg/m³, besonders bevorzugt minimal 1850 kg/m³, ist.

7. Schallschutzbauteil (2) nach einem der Ansprüche 1 bis 6, **dadurch gekennzeichnet, dass** das Bindemittel wenigstens einen Zementleim umfasst.

8. Schallschutzbauteil (2) nach einem der Ansprüche 1 bis 7, **dadurch gekennzeichnet, dass** der Bereich aus haufwerksporigem Beton (1) wenigstens eine erste Oberfläche des Schallschutzbauteils (2) ausbildet, wobei sich die erste Oberfläche entlang einer ersten Längsseite (6) des Schallschutzbauteils (2) erstreckt.

9. Schallschutzbauteil (2) nach einem der Ansprüche 1 bis 8, **dadurch gekennzeichnet, dass** sich die erste Oberfläche des Schallschutzbauteils (2) im Wesentlichen über eine normal zur ersten Längsseite (6) stehenden Höhe des Schallschutzbauteils (2) erstreckt.

10. Schallschutzbauteil (2) nach einem der Ansprüche 1 bis 9, **dadurch gekennzeichnet, dass** wenigstens ein Teil des Bereichs aus haufwerksporigem Beton (1) in einem Auffahrbereich (7) des Schallschutzbauteils (2) angeordnet ist.

11. Schallschutzbauteil nach einem der Ansprüche 1 bis 10, **dadurch gekennzeichnet, dass** der Betonkörper einen Stützkörper (4) aus einem im Wesentlichen porenfreien Beton aufweist, wobei der wenigstens eine Bereich aus haufwerksporigem Beton (1) an dem Stützkörper (4) befestigt ist.

## Claims

1. Soundproofing component (2) comprising a concrete body, wherein the concrete body comprises at least one region of aggregate-porous concrete (1), wherein the aggregate-porous concrete (1) comprises at least one binder and aggregates, wherein the soundproofing component (2) is designed as a concrete barrier element (5), wherein the soundproofing component (2) has on at least one side a rejection profile as a characteristically designed profile which is intended to attenuate accidents involving vehicles, wherein at least a part of the region of aggregate-porous concrete extends into the rejection profile, **characterized in that** the aggregate-porous concrete (1) further includes fibers, **in that** the soundproofing component (2) has a base (9) of a substantially non-porous concrete, which base (9) stands on the subsoil in the assembled state of the soundproofing component (2), and **in that** the at least one region of aggregate-porous concrete covers a major part of the area of the rejection profile.

2. Soundproofing component (2) according to claim 1, **characterized in that** the fibers comprise at least one plastic, in particular a thermoplastic synthetic material, preferably polypropylene.

3. Soundproofing component (2) according to claim 1 or 2, **characterized in that** the fiber content of the aggregate-porous concrete (1) is preferably at most 3 kg/m³, in particular at most 2 kg/m³, particularly preferably at most 1.6 kg/m³.

4. Soundproofing component (2) according to one of claims 1 to 3, **characterized in that** the fiber content of the aggregate-porous concrete (1) is preferably a minimum of 1.0 kg/m³, in particular a minimum of 1.2 kg/m³, particularly preferably a minimum of 1.4 kg/m³.

5. Soundproofing component (2) according to one of claims 1 to 4, **characterized in that** the bulk density of the aggregate-porous concrete (1) is preferably at most 2000 kg/m³, in particular at most 1950 kg/m³, particularly preferably at most 1900 kg/m³.

6. Soundproofing component (2) according to one of claims 1 to 5, **characterized in that** the bulk density of the aggregate-porous concrete (1) is preferably at least 1650 kg/m³, in particular at least 1750 kg/m³, particularly preferably at least 1850 kg/m³.

7. Soundproofing component (2) according to one of claims 1 to 6, **characterized in that** the binder comprises at least one cement paste.

8. Soundproofing component (2) according to one of claims 1 to 7, **characterized in that** the region of aggregate-porous concrete (1) forms at least a first surface of the soundproofing component (2), wherein the first surface extends along a first longitudinal side (6) of the soundproofing component (2).

9. Soundproofing component (2) according to one of claims 1 to 8, **characterized in that** the first surface of the soundproofing component (2) extends substantially over a height of the soundproofing component (2) normal to the first longitudinal side (6).

10. Soundproofing component (2) according to one of claims 1 to 9, **characterized in that** at least a part of the region of aggregate-porous concrete (1) is arranged in a drive-up area (7) of the soundproofing component (2).

11. Soundproofing component according to one of claims 1 to 10, **characterized in that** the concrete body comprises a support body (4) made of a substantially non-porous concrete, wherein the at least one region of aggregate-porous concrete (1) is fixed to the support body (4).

## Revendications

1. Élément antibruit (2) comprenant un corps en béton, dans lequel le corps en béton comprend au moins une partie en béton de texture caverneuse (1), lequel béton de texture caverneuse (1) contient au moins un liant et des additifs, l'élément antibruit (2) étant conçu comme un élément de glissière de sécurité en béton (5), l'élément antibruit (2) présentant sur au moins un côté un profil déflecteur ayant une forme caractéristique qui est destiné à atténuer l'impact de véhicules, au moins une partie de la partie en béton de texture caverneuse s'étendant jusqu'au profil déflecteur, **caractérisé en ce que** le béton de texture caverneuse (1) contient en outre des fibres, **en ce que** l'élément antibruit (2) comporte un socle (9) fait d'un béton non poreux pour l'essentiel, lequel socle (9) repose sur le substrat dans l'état monté de l'élément antibruit (2), et **en ce que** l'au moins une partie en béton de texture caverneuse couvre l'aire du profil déflecteur.

2. Élément antibruit (2) selon la revendication 1, **caractérisé en ce que** les fibres comprennent au moins un matériau de synthèse, en particulier un matériau de synthèse thermoplastique, de préférence du polypropylène.

3. Élément antibruit (2) selon la revendication 1 ou 2, **caractérisé en ce que** la densité de fibres du béton de texture caverneuse (1) est de préférence de 3 kg/m³ au maximum, en particulier de 2 kg/m³ au maximum, tout particulièrement de 1,6 kg/m³ au maximum.

4. Élément antibruit (2) selon l'une des revendications 1 à 3, **caractérisé en ce que** la densité de fibres du béton de texture caverneuse (1) est de préférence de 1,0 kg/m³ au minimum, en particulier de 1,2 kg/m³ au minimum, tout particulièrement de 1,4 kg/m³ au minimum.

5. Élément antibruit (2) selon l'une des revendications 1 à 4, **caractérisé en ce que** la masse volumique apparente du béton de texture caverneuse (1) est de préférence de 2000 kg/m³ au maximum, en particulier de 1950 kg/m³ au maximum, tout particulièrement de 1900 kg/m³ au maximum.

6. Élément antibruit (2) selon l'une des revendications 1 à 5, **caractérisé en ce que** la masse volumique apparente du béton de texture caverneuse (1) est de préférence de 1650 kg/m³ au minimum, en particulier de 1750 kg/m³ au minimum, tout particulièrement de 1850 kg/m³ au minimum.

7. Élément antibruit (2) selon l'une des revendications 1 à 6, **caractérisé en ce que** le liant contient au moins un ciment-colle.

8. Élément antibruit (2) selon l'une des revendications 1 à 7, **caractérisé en ce que** la partie en béton de texture caverneuse (1) forme au moins une première surface de l'élément antibruit (2), laquelle première surface s'étend le long d'un premier côté longitudinal (6) de l'élément antibruit (2).

9. Élément antibruit (2) selon l'une des revendications 1 à 8, **caractérisé en ce que** la première surface de l'élément antibruit (2) s'étend pour l'essentiel au-dessus d'une hauteur de l'élément antibruit (2) perpendiculaire au premier côté longitudinal (6).

10. Élément antibruit (2) selon l'une des revendications 1 à 9, **caractérisé en ce qu'**au moins une partie de la partie en béton de texture caverneuse (1) est disposée dans une zone de collision (7) de l'élément antibruit (2).

11. Élément antibruit selon l'une des revendications 1 à 10, **caractérisé en ce que** le corps en béton comporte un élément d'appui (4) fait d'un béton non poreux pour l'essentiel, l'au moins une partie en béton de texture caverneuse (1) étant fixée à l'élément d'appui (4).
